# FASCICULE DE BREVET EUROPEEN

(11) **EP 1 627 523 B1**
(45) Date de publication et mention de la délivrance du brevet: **03.05.2017**
(21) Numéro de dépôt: 04767165.6
(22) Date de dépôt: 25.05.2004
(51) Int. Cl.: H04M 17/00, H04W 4/24, H04M 15/00

(54) **SYSTEME, PROCÉDÉ ET APPAREIL DANS UN RÉSEAU DE TÉLÉPHONIE MOBILE COMPRENANT UN SERVEUR AVEC UNE BASE DE DONNÉES POUR LES FOURNISSEURS ET UNE BASE DE DONNÉES POUR LES CLIENTS**
SYSTEM, VERFAHREN UND GERAET IN EINEM MOBILTELEKOMMUNIKATIONSNETZWERK MIT EINER DIENSTANBIETERDATENBANK UND EINER KUNDENDATENBANK
SYSTEM, METHOD AND DEVICE IN A MOBILE TELEPHONE NETWORK WITH A DATABASE FOR THE PROVIDERS AND A DATABASE FOR THE USERS

(30) Priorité: 27.05.2003 FR 0306440
(43) Date de publication de la demande: 22.02.2006
(73) Titulaire: Orange, 75015 Paris (FR)
(72) Inventeur: BAUBAN, Patrick, F-14000 Caen (FR); MICHON, Philippe, F-14760 Bretteville sur Odon (FR)
(74) Mandataire: Delumeau, François Guy
(86) Numéro de dépôt international: PCT/FR2004/001287
(87) Numéro de publication internationale: WO 2004/107726

(56) Documents cités:
- WO-A-98/21874
- WO-A-98/47112
- US-A- 5 909 485
- US-A- 6 058 300

## Description

La présente invention concerne, de façon générale, le domaine des télécommunications.

Plus précisément, l'invention concerne, selon un premier de ses aspects, un système pour utiliser un réseau de téléphonie mobile à l'aide d'une première entité prévue pour stocker des données de valeur correspondant à du temps de communication sur le réseau, la première entité étant associée à un code identifiant un moyen terminal d'utilisateur appartenant au réseau, par l'intermédiaire d'une relation pré-établie entre un opérateur du réseau et l'utilisateur du moyen terminal, ce système comprenant un serveur de gestion hébergeant une première base de données pour enregistrer les données concernant au moins la première entité.

Ainsi, le système de l'invention trouve une application bien particulière pour l'utilisation d'un réseau de téléphonie mobile, où la relation pré-établie entre l'opérateur et l'utilisateur est matérialisée par la première entité qui peut par exemple être un compte prépayé, destiné à permettre l'utilisation du réseau de téléphonie mobile de l'opérateur de télécommunication auprès duquel l'utilisateur est inscrit.

De tels comptes utilisateurs sont maintenant couramment utilisés pour permettre l'accès sans abonnement par l'intermédiaire d'un téléphone mobile à un réseau de téléphonie mobile d'un opérateur. Ces comptes utilisateurs où sont stockées des unités téléphoniques correspondant à du temps de communication sur le réseau, permettent ainsi de passer des appels prépayés et/ou d'accéder à divers services proposés par l'opérateur. Le compte est alors associé au numéro d'une carte SIM (pour Subscriber Identity Module en anglais) du réseau de l'opérateur, insérée dans le téléphone mobile de l'utilisateur. L'utilisateur peut ainsi facilement contrôler le montant de ses communications.

Cependant, la contrainte à prendre en compte par rapport à un système avec abonnement, est que l'utilisateur doit recharger son compte lorsque son crédit est épuisé, de façon à obtenir des unités téléphoniques correspondant à du temps de communication, pour pouvoir utiliser le réseau de l'opérateur.

Différentes techniques sont aujourd'hui disponibles pour permettre d'utiliser un réseau de téléphonie mobile dans le cadre d'une relation pré-établie entre l'utilisateur final et l'opérateur du réseau et pour recharger un compte prépayé pour téléphone mobile, la plus courante étant la distribution par l'opérateur de cartes à gratter sur lesquelles sont inscrits des codes d'identification, recouverts par une surface opaque destinée à être retirée. L'utilisateur achète alors la carte pour un montant déterminé auprès d'un revendeur commerçant, gratte la surface opaque de façon à dévoiler le code d'identification et téléphone à l'opérateur pour le lui communiquer. L'opérateur vérifie la validité du code et, en cas de réussite de cette opération d'authentification, recharge le compte prépayé du montant associé au code d'identification de la carte.

L'inconvénient de cette méthode côté utilisateur est que ce dernier doit acquérir un support physique, à savoir une carte à gratter, et transmettre lui-même le code à l'opérateur pour effectuer le rechargement de son compte. Un autre inconvénient concerne la distribution des cartes à gratter qui s'effectue par l'intermédiaire de points de revente statiques. Cette méthode connue basée sur l'utilisation de cartes à gratter est donc relativement inconfortable et entraîne un manque de flexibilité pour l'utilisateur dans la gestion de son compte prépayé.

De plus, côté opérateur, l'utilisation d'une carte à gratter pour l'accès à son réseau implique un certain nombre d'opérations contraignantes, parmi lesquelles la fabrication de la carte avec association d'un code d'identification, la mémorisation du code d'identification dans un serveur informatique d'authentification, la distribution et la vente de la carte, etc... Toutes ces opérations entraînent des coûts opérationnels élevés pour l'opérateur.

Egalement, l'opérateur n'est pas informé en temps réel de l'achat d'une carte à gratter par un client. L'opérateur ne dispose ainsi d'aucun moyen véritable pour estimer en temps réel le stock de cartes à gratter des différents revendeurs et pour tenir un historique des transactions effectuées entre les clients et les revendeurs de cartes à gratter. Ainsi, cette méthode utilisant des cartes à gratter apparaît très mal adaptée à une gestion efficace par l'opérateur du rechargement des comptes prépayés de ses clients.

Le document US 6 058 300 A décrit un système et un procédé de gestion d'appels prépayés.

La présente invention, qui se fonde sur ces différents constats, a pour but de pallier les inconvénients précités liés à l'utilisation des cartes à gratter, aussi bien côté client, utilisateur final du réseau, que côté opérateur.

Avec cet objectif en vue, l'invention vise plus particulièrement à mettre en oeuvre un système répondant au besoin, aujourd'hui non satisfait, de plus de souplesse et de simplicité, pour l'utilisation d'un réseau de téléphonie mobile dans le cadre d'une relation pré-établie entre l'utilisateur final et l'opérateur du réseau, qui permette à l'utilisateur d'utiliser le réseau mobile de l'opérateur sans avoir d'abonnement, ni de cartes quelconques pour y accéder.

A cette fin, le système de l'invention, par ailleurs conforme à la définition générique qu'en donne le préambule ci-dessus, est essentiellement caractérisé en ce que le serveur héberge une seconde base de données pour enregistrer des données concernant au moins une seconde entité, prévue pour stocker des données de valeur correspondant à du temps de communication sur le réseau, ladite seconde entité étant affectée à un fournisseur de temps de communication, ledit système comprenant une transmission, par l'intermédiaire d'une application sécurisée depuis un appareil de communication du fournisseur vers le serveur, d'une requête de transfert incluant au moins le code associé à la première entité, un identifiant du fournisseur et une donnée de valeur déterminée, l'opération de transfert étant effectuée par le serveur de gestion à la réception de la requête par l'intermédiaire de moyens de gestion de la seconde base de données permettant de diminuer les données de valeur de la seconde entité en fonction de la donnée de valeur déterminée et par l'intermédiaire de moyens de gestion de la première base de données permettant d'augmenter les données de valeur de la première entité en fonction de la donnée de valeur déterminée.

Concrètement, l'opérateur doit donc disposer d'un réseau de fournisseurs de temps de communication sur le réseau, qui lui achètent en gros des unités téléphoniques correspondant à du temps de communication pour utiliser le réseau, pour les revendre au détail aux clients finaux sans avoir de support physique à gérer. La seconde entité est alors constituée, par exemple, d'un compte fournisseur auprès de l'opérateur, où sont stockées des unités téléphoniques achetées par le fournisseur à l'opérateur.

L'utilisateur final doit au préalable avoir été enregistré dans le réseau de l'opérateur grâce à l'achat d'une carte SIM du réseau de l'opérateur, permettant de l'identifier dans le réseau.

Selon une caractéristique de l'invention, le moyen terminal de l'utilisateur est un téléphone mobile et, dans un mode de réalisation avantageux de l'invention, le code associé à la première entité inclus dans la requête de transfert comprend le numéro de mobile de l'utilisateur.

Dans un mode de mise en oeuvre du système de l'invention, l'application sécurisée est une application du type infrastructure à clé publique permettant au fournisseur de signer la requête transmise pour s'authentifier auprès du serveur.

Dans une variante, l'appareil de communication du fournisseur est un téléphone mobile, l'application sécurisée étant hébergée par une carte SIM insérée dans le téléphone mobile du fournisseur.

Avantageusement, l'identifiant du fournisseur inclus dans la requête de transfert comprend le numéro de mobile du fournisseur.

De préférence, la requête transmise au serveur est signée par la saisie d'un code confidentiel sur le téléphone mobile du fournisseur.

Avantageusement, le code confidentiel utilisé pour la signature est différent du code confidentiel utilisé pour débloquer le téléphone.

De préférence, le serveur de gestion, à la réception de la requête signée par le fournisseur, vérifie la signature par l'intermédiaire de moyens d'authentification, de sorte à confirmer ou infirmer la transmission de la requête et, dans le cas où la transmission est confirmée, effectue l'opération de transfert.

Selon une variante possible de l'invention, préalablement à la transmission sécurisée de la requête de transfert par l'intermédiaire de l'application sécurisée, le système comprend une transmission, depuis l'appareil de communication du fournisseur vers des moyens de vérification du serveur, des informations constituant la requête de transfert pour une vérification préalable en temps réel de ces informations par le serveur et, après validation des informations constituant la requête de transfert, l'émission par le serveur d'une demande d'authentification à destination du fournisseur, de sorte à initier la transmission sécurisée de la requête de transfert par l'intermédiaire de l'application sécurisée.

Dans un mode de réalisation, le fournisseur se connecte au serveur en mode vocal au moyen de son appareil de communication par l'intermédiaire d'un numéro de téléphone de service et transmet les informations constituant la requête de transfert aux moyens de vérification du serveur en tapant sur l'appareil de communication le code associé à la première entité, l'identifiant fournisseur et la donnée de valeur déterminée.

Dans un autre mode de réalisation, le fournisseur transmet les informations constituant la requête de transfert aux moyens de vérification du serveur par l'intermédiaire d'un message numérique libellé suivant un format prédéterminé.

De préférence, la vérification des informations constituant la requête de transfert par les moyens de vérification du serveur consiste à vérifier que le code associé à la première entité transmis correspond à un utilisateur appartenant au réseau selon la relation pré-établie.

Avantageusement, parallèlement à vérification des informations constituant la requête de transfert, le serveur envoie à destination du fournisseur, un message demandant des informations commerciales se rapportant à l'utilisateur, permettant une mise à jour de la première base de données.

Selon ce mode de réalisation, le serveur de gestion comprend des moyens de mise à jour de la première base de données avec des informations commerciales relatives aux utilisateurs.

Dans une variante, le système comprend l'émission par le serveur de gestion d'une confirmation du transfert à destination du fournisseur et de l'utilisateur.

De préférence, la confirmation est envoyée par l'intermédiaire d'un message numérique libellé suivant un format prédéterminé.

Le réseau de téléphonie mobile utilisé pour la mise en oeuvre de l'invention est par exemple constitué par un réseau GSM, le message numérique étant alors de préférence constitué par un message court de service SMS.

Comme le sait bien l'homme de métier, l'acronyme GSM dérive de l'expression anglo-saxonne « Global System for Mobile communications » et constitue l'appellation internationale d'un système de téléphonie radio cellulaire numérique répondant à la norme elle-même dite « GSM ».

L'acronyme SMS dérive quant à lui de l'expression anglo-saxonne « Short Message Service » et désigne, dans la norme GSM, un service bi-directionnel de messages courts.

Néanmoins, la référence faite dans la présente description à un réseau GSM doit être considérée comme incluant la référence à un réseau UMTS, à un réseau GPRS, et à tout réseau téléphonique dans lequel une relation pré-établie entre l'opérateur et un utilisateur final basée sur un compte prépayé peut être mise en oeuvre pour l'utilisation de ce réseau.

Le système de l'invention présente de nombreux avantages, qui peuvent être mis en évidence sur une application au rechargement d'un compte prépayé pour téléphone mobile.

Notamment, ce système permet à l'opérateur de suivre avec précision l'évolution des comptes utilisateurs et des comptes fournisseurs et ainsi d'améliorer les contrôles. Le système permet également d'assurer le lien avec le serveur de gestion de l'opérateur pour autoriser ou interdire très simplement les accès au réseau de téléphonie mobile.

Le système de l'invention facilite également le rechargement de son compte par l'utilisateur, puisqu'il permet de se passer de tout support physique. Ce système permet ainsi de supprimer un certain nombre de tâches matérielles génératrices de coûts pour l'opérateur, qui sont indispensables à la mise en oeuvre des méthodes de rechargement d'un compte prépayé pour mobile actuelles basées sur l'utilisation de cartes à gratter.

D'autres caractéristiques et avantages de l'invention ressortiront plus clairement de la description qui est faite ci-après, à titre indicatif et nullement limitatif, en référence aux figures suivantes dans lesquelles :

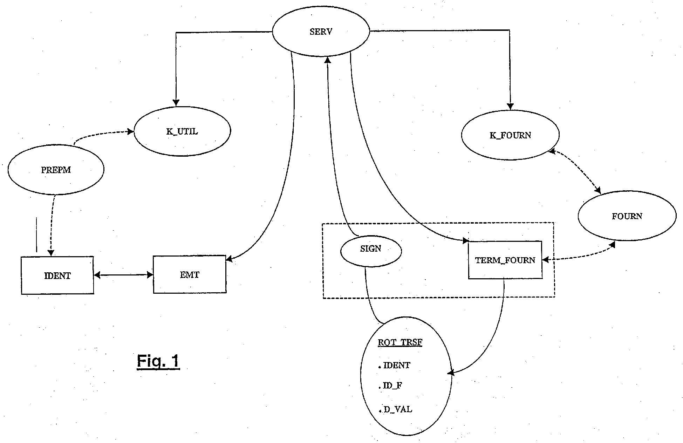

- la figure 1 représente de façon schématique et symbolique les principaux acteurs et les principales opérations mis en oeuvre dans le système de l'invention, présenté dans son application au rechargement d'un compte prépayé pour téléphone mobile, et

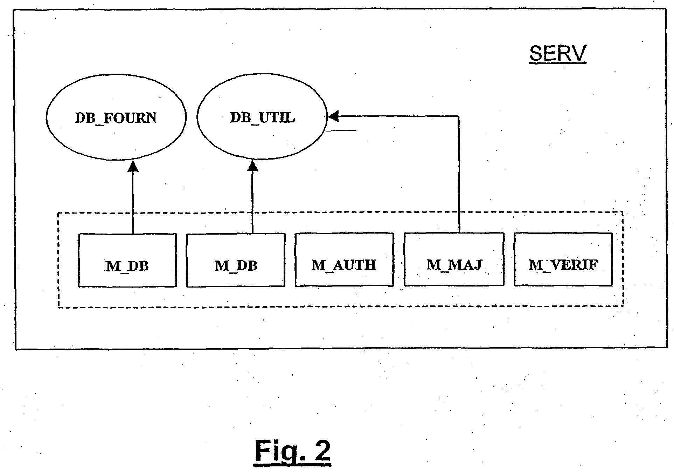

- la figure 2 représente de façon schématique l'architecture du serveur de gestion mis en oeuvre dans le cadre du système selon la présente invention.

Comme annoncé précédemment, l'invention concerne un système permettant à un utilisateur d'utiliser un réseau de téléphonie mobile à l'aide d'une première entité, en l'occurrence un compte prépayé utilisateur K_UTIL. Ce compte utilisateur est prévu pour stocker des données de valeur correspondant à du temps de communication sur le réseau.

L'utilisateur dispose d'un moyen terminal pour accéder au réseau, typiquement un téléphone mobile EMT et doit au préalable avoir été enregistré auprès d'un opérateur du réseau grâce à l'achat d'une carte SIM du réseau de l'opérateur, destinée à être insérée dans son téléphone mobile. Le compte prépayé utilisateur K_UTIL est en fait associé à un code IDENT, identifiant le téléphone mobile de l'utilisateur, par l'intermédiaire d'une relation pré-établie PREPM entre un opérateur du réseau de téléphonie mobile et l'utilisateur. Ce code IDENT peut par exemple être constitué par le numéro de la carte SIM du téléphone mobile EMT, ou par le numéro de mobile MSISDN de l'utilisateur (acronyme pour l'expression anglo-saxonne "Mobile Station international ISDN number"), ou par tout autre code préalablement agréé, enregistré et accepté par le réseau.

Selon l'invention, l'opérateur doit disposer d'un réseau de fournisseurs de temps de communication sur le réseau, qui lui achètent en gros des unités téléphoniques correspondant à du temps de communication pour utiliser le réseau, pour les revendre au détail aux utilisateurs finaux. Chaque fournisseur FOURN agréé par l'opérateur pour vendre des unités téléphoniques dispose donc d'un compte fournisseur K_FOURN auprès de celui-ci pour stocker des données de valeur correspondant à du temps de communication sur le réseau.

Un serveur de gestion SERV appartenant au réseau de téléphonie mobile héberge une première base de données DB_UTIL pour enregistrer les données concernant les différents comptes prépayés utilisateur et une seconde base de données DB_FOURN pour enregistrer les données concernant les différents comptes fournisseurs.

Dans un mode de réalisation de l'invention pour l'application au rechargement d'un compte prépayé, un utilisateur s'adresse à un fournisseur agréé par l'opérateur du réseau auprès duquel l'utilisateur est inscrit, pour lui acheter des unités téléphoniques correspondant à du temps de communication sur le réseau.

Pour ce faire, l'utilisateur, ou toute autre personne, par exemple un ami ou un parent de l'utilisateur, disposant du code IDENT associé au compte prépayé de l'utilisateur, à savoir du numéro MSISDN de mobile de l'utilisateur et souhaitant recharger le compte prépayé de l'utilisateur, prend contact avec un fournisseur et lui demande de recharger le compte prépayé de l'utilisateur pour un montant déterminé D_VAL correspondant à l'achat d'une durée de communication spécifique sur le réseau. Après paiement de l'utilisateur ou de ladite personne par un moyen quelconque, le fournisseur va transmettre au serveur de gestion de l'opérateur les informations nécessaires au rechargement du compte prépayé de l'utilisateur.

Le système comprend alors la transmission, par l'intermédiaire d'une application sécurisée dédiée au rechargement SIGN, depuis un appareil de communication TERM_FOURN du fournisseur vers le serveur SERV, d'une requête de transfert RQT_TRSF incluant les informations de rechargement, en l'occurrence au moins le code IDENT associé au compte prépayé utilisateur permettant d'identifier le téléphone mobile de l'utilisateur, la donnée de valeur déterminée D_VAL, ainsi qu'un identifiant du fournisseur ID_F.

L'appareil de communication du fournisseur est constitué par un téléphone mobile et l'application sécurisée dédiée au rechargement d'un compte prépayé utilisateur est hébergée par une carte SIM du réseau de l'opérateur insérée dans le téléphone mobile du fournisseur. Grâce à cette caractéristique, les points de revente d'unités téléphoniques permettant d'utiliser le réseau ne sont plus statiques vis-à-vis de l'utilisateur. L'identifiant du fournisseur est de préférence constitué par le numéro de mobile MSISDN du fournisseur.

Le fournisseur rentre tout d'abord dans l'application sécurisée lui permettant de transmettre les informations de rechargement au serveur. Il saisit alors le numéro de mobile MSISDN IDENT de l'utilisateur ainsi que le montant à recharger D_VAL sur le compte utilisateur K_UTIL, par l'intermédiaire du clavier de son téléphone mobile.

L'application sécurisée SIGN installée sur la carte SIM du fournisseur est une application du type infrastructure à clé publique permettant de signer les transactions effectuées pour l'authentification du fournisseur auprès du serveur de gestion. Ainsi, une clé de signature ou clé privée est installée sur la carte SIM du fournisseur et seul le fournisseur connaît cette clé. A cette clé privée est associée une clé publique que le serveur connaît et qu'il utilise pour vérifier la signature.

Le fournisseur, après avoir rentré les informations de rechargement IDENT et D_VAL constituant la requête de transfert, va donc signer cette requête par l'utilisation d'un code confidentiel. Ce code confidentiel est choisi de préférence différent de celui utilisé pour débloquer le téléphone.

Un message comportant la requête signée est alors transmis par l'intermédiaire de l'application sécurisée à destination du serveur de gestion SERV. L'identifiant du fournisseur ID_F apparaît alors automatiquement en entête du message, typiquement un message court de service SMS, comportant la requête signée. Le serveur comprend des moyens d'authentification M_AUTH disposant de la clé publique associée à la clé privée utilisée par le fournisseur pour signer la requête, de façon à vérifier la signature. Les moyens d'authentification du serveur permettent donc de confirmer ou d'infirmer la transmission de la requête de transfert et, dans le cas où la transmission est confirmée, le serveur effectue l'opération de transfert et recharge le compte prépayé utilisateur K_UTIL du montant déterminé.

Ainsi, le compte fournisseur K_FOURN est débité du montant déterminé et le compte utilisateur K_UTIL est crédité du montant déterminé en s'appuyant sur les bases de données utilisateurs et fournisseurs. Pour ce faire, le serveur comprend des moyens de gestion M_DB d'une part, de la base de données fournisseur DB_FOURN, permettant de diminuer les données de valeur du compte fournisseur K_FOURN en fonction de la donnée de valeur déterminée D_VAL et, d'autre part, de la base de données utilisateurs DB_UTIL, permettant d'augmenter les données de valeur du compte utilisateur K_UTIL en fonction de la donnée de valeur déterminée D_VAL.

Une confirmation du transfert peut être envoyée par le serveur à destination du fournisseur et de l'utilisateur, leur indiquant les nouveaux soldes de leurs comptes respectifs. Cette confirmation peut être envoyée par l'intermédiaire d'un message court de service SMS.

Selon une variante, préalablement à la transmission de la requête de transfert signée par l'intermédiaire de l'application sécurisée, le système comprend une transmission, depuis l'appareil de communication du fournisseur vers le serveur, des informations constituant la requête de transfert pour une vérification préalable en temps réel de ces informations par l'intermédiaire de moyens de vérification du serveur M_VERIF.

Pour ce faire, le fournisseur, dans un premier mode de réalisation, se connecte au serveur en mode vocal au moyen de son téléphone mobile, par l'intermédiaire d'un numéro de téléphone de service et transmet les informations constituant la requête de transfert aux moyens de vérification M_VERIF du serveur en tapant sur le clavier de son téléphone mobile le code IDENT associé au compte prépayé utilisateur, son identifiant fournisseur ID_F et la donnée de valeur déterminée D_VAL. Selon un autre mode de réalisation, le fournisseur transmet les informations constituant la requête de transfert aux moyens de vérification du serveur M_VERIF par l'intermédiaire d'un message numérique libellé suivant un format prédéterminé, typiquement un message court de service SMS. Dans ce cas, l'identifiant utilisateur ID_F apparaît automatiquement dans l'en-tête du SMS.

Par exemple, la vérification des informations constituant la requête de transfert par les moyens de vérification du serveur peut consister à vérifier que le code IDENT transmis correspond effectivement à un utilisateur appartenant au réseau de téléphonie mobile selon la relation pré-établie, et donc qu'il est bien inscrit auprès de l'opérateur du réseau. Les moyens de vérification peuvent également vérifier que le solde du compte fournisseur K_FOURN est suffisant pour opérer l'opération de transfert de la donnée de valeur déterminée D_VAL vers le compte utilisateur K_UTIL.

A ce stade, selon une variante de l'invention, le serveur envoie à destination du fournisseur un message demandant des informations commerciales se rapportant à l'utilisateur, de façon à permettre une mise à jour de la base de données utilisateurs DB_UTIL à l'aide de ces informations. Cette variante du système selon l'invention est mise en oeuvre en fonction de critères qui dépendent du trafic et de la qualité du réseau. Dans le cas où ces critères sont remplis, le serveur envoie donc un message à destination du téléphone mobile du fournisseur incluant des demandes diverses à vocation commerciale auxquelles l'utilisateur répond ou non. Ces demandes peuvent par exemple concerner le nom, le prénom, l'âge de l'utilisateur et, plus généralement, toute information susceptible d'intéresser l'opérateur du réseau dans un but commercial. Dans le cas, où l'utilisateur accepte de répondre à de telles demandes, les informations qu'il fournit sont envoyées en retour depuis le téléphone mobile du fournisseur vers le serveur, permettant la mise à jour de la base de données utilisateurs DB_UTIL par l'intermédiaire de moyens de mise à jour M_MAJ du serveur.

Pour la mise en oeuvre de cette variante concernant la réception optionnelle de demandes d'informations commerciales se rapportant aux utilisateurs et l'envoi des réponses, des applications spécifiques sont développées sur la carte SIM et le téléphone mobile du fournisseur.

Après validation des informations déjà existantes constituant la requête de transfert, et mise à jour éventuelle de la base de données utilisateur DB_UTIL avec les informations commerciales acquises se rapportant à l'utilisateur, le système comprend l'émission vers le téléphone mobile du fournisseur, par l'intermédiaire des moyens d'authentification du serveur, d'une demande d'authentification, de sorte à initier la transmission sécurisée de la requête de transfert par l'intermédiaire de l'application sécurisée. La demande d'authentification comprend les informations de rechargement IDENT et D_VAL déjà transmises par le fournisseur pour vérification préalable.

Le fournisseur, après avoir vérifié les informations de rechargement constituant la requête de transfert IDENT et D_VAL transmises dans la demande d'authentification, s'authentifie auprès du serveur avec sa signature. Pour ce faire, le fournisseur envoie la requête signée au serveur par l'utilisation de son code confidentiel.

Comme expliqué précédemment, le serveur, par l'intermédiaire de ses moyens d'authentification, vérifie la signature de sorte à confirmer ou infirmer la transmission de la requête de transfert et, dans le cas où la transmission est confirmée, le serveur effectue l'opération de transfert par laquelle le compte fournisseur K_FOURN est débité et le compte utilisateur K_UTIL est crédité du montant déterminé D_VAL, en s'appuyant sur les bases de données utilisateurs DB_UTIL et fournisseurs DB_FOURN.

Egalement, en option, une confirmation du transfert peut être envoyée par le serveur à destination des téléphones mobiles du fournisseur et de l'utilisateur, leur indiquant les nouveaux soldes de leurs comptes respectifs. Cette confirmation peut être envoyée par l'intermédiaire d'un message court de service SMS.

## Revendications

1. Système pour utiliser un réseau de téléphonie mobile à l'aide d'une première entité (K_UTIL) prévue pour stocker des données de valeur correspondant à du temps de communication sur le réseau, ladite première entité étant associée à un code (IDENT) identifiant un moyen terminal d'utilisateur (EMT) appartenant au réseau, par l'intermédiaire d'une relation pré-établie (PREPM) entre un opérateur du réseau et l'utilisateur du moyen terminal, ce système comprenant un serveur de gestion (SERV) hébergeant une première base de données (DB_UTIL) pour enregistrer les données concernant au moins la première entité (K_UTIL), **caractérisé en ce que** le serveur héberge une seconde base de données (DB_FOURN) pour enregistrer des données concernant au moins une seconde entité (K_FOURN), prévue pour stocker des données de valeur correspondant à du temps de communication sur le réseau, ladite seconde entité (K_FOURN) étant affectée à un fournisseur de temps de communication (FOURN), ledit système comprenant des moyens de transmission, par l'intermédiaire d'une application sécurisée (SIGN) depuis un appareil de communication du fournisseur (TERM_FOURN) vers le serveur, d'une requête de transfert (RQT_TRSF) incluant au moins le code (IDENT) associé à la première entité, un identifiant du fournisseur (ID_F) et une donnée de valeur déterminée (D_VAL), l'opération de transfert étant effectuée par le serveur de gestion à la réception de la requête par l'intermédiaire de moyens de gestion (M_DB) de la seconde base de données (DB_FOURN) permettant de diminuer les données de valeur de la seconde entité en fonction de la donnée de valeur déterminée (D_VAL) et par l'intermédiaire de moyens de gestion (M_DB) de la première base de données (DB_UTIL) permettant d'augmenter les données de valeur de la première entité en fonction de la donnée de valeur déterminée (D_VAL).

2. Système selon la revendication 1, **caractérisé en ce que** le moyen terminal de l'utilisateur (EMT) est un téléphone mobile.

3. Système selon la revendication 2, **caractérisé en ce que** le code (IDENT) associé à la première entité inclus dans la requête de transfert (RQT_TRSF) comprend le numéro de mobile de l'utilisateur.

4. Système selon l'une quelconque des revendications 1 à 3, **caractérisé en ce que** l'application sécurisée (SIGN) est une application du type infrastructure à clé publique, permettant au fournisseur de signer la requête transmise pour s'authentifier auprès du serveur (SERV).

5. Système selon l'une quelconque des revendications 1 à 4, **caractérisé en ce que** l'appareil de communication du fournisseur (TERM_FOURN) est un téléphone mobile, l'application sécurisée (SIGN) étant hébergée par une carte SIM insérée dans le téléphone mobile du fournisseur.

6. Système selon la revendication 5, **caractérisé en ce que** l'identifiant du fournisseur (ID_F) inclus dans la requête de transfert (RQT_TRSF) comprend le numéro de mobile du fournisseur.

7. Système selon la revendication 5 ou 6, **caractérisé en ce que** la requête (RQT_TRSF) transmise au serveur (SERV) est signée par la saisie d'un code confidentiel sur le téléphone mobile du fournisseur.

8. Système selon la revendication 7, **caractérisé en ce que** le code confidentiel utilisé pour la signature est différent du code confidentiel utilisé pour débloquer le téléphone.

9. Système selon l'une quelconque des revendications 4 à 8, **caractérisé en ce que** le serveur de gestion (SERV), à la réception de la requête signée par le fournisseur, vérifie la signature par l'intermédiaire de moyens d'authentification (M_AUTH), de sorte à confirmer ou infirmer la transmission de la requête et, dans le cas où la transmission est confirmée, effectue l'opération de transfert.

10. Système selon l'une quelconque des revendications précédentes, **caractérisé en ce que**, préalablement à la transmission sécurisée de la requête de transfert par l'intermédiaire de l'application sécurisée (SIGN), le système comprend une transmission, depuis l'appareil de communication du fournisseur vers des moyens de vérification du serveur (M_VERIF), des informations constituant la requête de transfert pour une vérification préalable en temps réel de ces informations par le serveur et, après validation des informations constituant la requête de transfert, l'émission par le serveur d'une demande d'authentification à destination du fournisseur, de sorte à initier la transmission sécurisée de la requête de transfert par l'intermédiaire de l'application sécurisée.

11. Système selon la revendication 10, **caractérisé en ce que** le fournisseur se connecte au serveur en mode vocal au moyen de son appareil de communication par l'intermédiaire d'un numéro de téléphone de service et transmet les informations constituant la requête de transfert aux moyens de vérification (M_VERIF) en tapant sur l'appareil de communication le code (IDENT) associé à la première entité, l'identifiant fournisseur (ID_F) et la donnée de valeur déterminée (D_VAL).

12. Système selon la revendication 10, **caractérisé en ce que** le fournisseur transmet les informations constituant la requête de transfert aux moyens de vérification (M_VERIF) du serveur par l'intermédiaire d'un message numérique libellé suivant un format prédéterminé.

13. Système selon la revendication 12, **caractérisé en ce que** le message numérique est constitué par un message court de service SMS.

14. Système selon l'une quelconque des revendications 10 à 13, **caractérisé en ce que** la vérification des informations constituant la requête de transfert par les moyens de vérification (M_VERIF) du serveur consiste à vérifier que le code (IDENT) associé à la première entité transmis correspond à un utilisateur appartenant au réseau selon la relation pré-établie.

15. Système selon l'une quelconque des revendications 10 à 14, **caractérisé en ce que**, parallèlement à la vérification des informations constituant la requête de transfert, le serveur envoie à destination du fournisseur, un message demandant des informations commerciales se rapportant à l'utilisateur, permettant une mise à jour de la première base de données (DB_UTIL).

16. Système selon la revendication 15, **caractérisé en ce que** le serveur de gestion (SERV) comprend des moyens de mise à jour (M_MAJ) de la première base de données (DB_UTIL) avec des informations commerciales relatives aux utilisateurs.

17. Système selon l'une quelconque des revendications précédentes, **caractérisé en ce qu'**il comprend l'émission par le serveur de gestion (SERV) d'une confirmation du transfert à destination du fournisseur et de l'utilisateur.

18. Système selon la revendication 17, **caractérisé en ce que** la confirmation est envoyée par l'intermédiaire d'un message court de service SMS.

19. Procédé d'utilisation d'un réseau de téléphonie mobile à l'aide d'une première entité (K_UTIL) prévue pour stocker des données de valeur correspondant à du temps de communication sur le réseau, ladite première entité étant associée à un code (IDENT) identifiant un moyen terminal d'utilisateur (EMT) appartenant au réseau, par l'intermédiaire d'une relation pré-établie (PREPM) entre un opérateur du réseau et l'utilisateur du moyen terminal, une première base de données (DB_UTIL) hébergée par un serveur de gestion (SERV) étant prévue pour enregistrer les données concernant au moins la première entité (K_UTIL), ledit procédé étant **caractérisé en ce qu'**il comprend :
l'enregistrement dans une seconde base de données (DB_FOURN) hébergée par le serveur, de données concernant au moins une seconde entité (K_FOURN) affectée à un fournisseur de temps de communication (FOURN) et prévue pour stocker des données de valeur correspondant à du temps de communication sur le réseau;
la transmission, par l'intermédiaire d'une application sécurisée (SIGN) depuis un appareil de communication du fournisseur (TERM_FOURN) vers le serveur, d'une requête de transfert (RQT_TRSF) incluant au moins le code (IDENT) associé à la première entité, un identifiant du fournisseur (ID_F) et une donnée de valeur déterminée (D_VAL) et,
à la réception de la requête de transfert par le serveur :
la diminution des données de valeur de la seconde entité en fonction de la donnée de valeur déterminée (D_VAL) par l'intermédiaire de moyens de gestion (M_DB) de la seconde base de données (DB_FOURN) et
l'augmentation des données de valeur de la première entité en fonction de la donnée de valeur déterminée (D_VAL) par l'intermédiaire de moyens de gestion (M_DB) de la première base de données (DB_UTIL).

20. Appareil de communication, **caractérisé en ce qu'**il est affecté à un fournisseur de temps de communication (FOURN) sur un réseau de téléphonie mobile et **en ce qu'**il comprend des moyens d'entrée d'informations de rechargement d'une première entité (K_UTIL) prévue pour stocker des données de valeur correspondant à du temps de communication sur le réseau, lesdites informations comprenant au moins un code (IDENT) associé à la première entité, un identifiant du fournisseur (ID_F) auquel est affectée une seconde entité (K_FOURN) prévue pour stocker des données de valeur correspondant à du temps de communication sur le réseau et une donnée de valeur (D_VAL) déterminée correspondant à du temps de communication devant être transféré de la seconde vers la première entité, et des moyens de transmission sécurisée (SIGN) des dites informations de rechargement vers un serveur de gestion (SERV) des dites première et secondes entités.

21. Programme d'ordinateur, **caractérisé en ce qu'**il comprend des instructions pour commander l'exécution du procédé selon la revendication 19, côté appareil de communication du fournisseur.

## Patentansprüche

1. System zur Verwendung eines Mobiltelefonienetzes mithilfe einer ersten Einheit (K_UTIL), die dafür vorgesehen ist, Wertdaten zu speichern, die Kommunikationszeit im Netz entsprechen, wobei die erste Einheit einem Code (IDENT) zugeordnet ist, der ein zum Netz gehöriges Benutzerendgerät (EMT) mittels einer vorab festgelegten Beziehung (PREPM) zwischen einem Netzbetreiber und dem Benutzer des Endgeräts identifiziert, wobei dieses System einen Verwaltungsserver (SERV) umfasst, der eine erste Datenbank (DB_UTIL) hostet, um Daten aufzuzeichnen, die wenigstens die erste Einheit (K_UTIL) betreffen, **dadurch gekennzeichnet, dass** der Server eine zweite Datenbank (DB_FOURN) hostet, um Daten aufzuzeichnen, die wenigstens eine zweite Einheit (K_FOURN) betreffen, die dafür vorgesehen ist, Wertdaten zu speichern, die der Kommunikationszeit im Netz entsprechen, wobei die zweite Einheit (K_FOURN) einem Kommunikationszeitanbieter (FOURN) zugewiesen ist, wobei das System Mittel umfasst, um mittels einer gesicherten Anwendung (SIGN) von einem Kommunikationsgerät des Anbieters (TERM_FOURN) zum Server eine Transferanfrage (RQT_TRSF) zu übertragen, die wenigstens den der ersten Einheit zugeordneten Code (IDENT), eine Kennung des Anbieters (ID_F) und eine Datenangabe von bestimmtem Wert (D_VAL) umfasst, wobei der Transfervorgang durch den Verwaltungsserver beim Empfang der Anfrage wie folgt durchgeführt wird: mittels Verwaltungsmitteln (M_DB) der zweiten Datenbank (DB_FOURN), wodurch es möglich ist, die Wertdaten der zweiten Einheit in Abhängigkeit von der Datenangabe von bestimmtem Wert (D_VAL) zu verringern, und mittels Verwaltungsmitteln (M_DB) der ersten Datenbank (DB_UTIL), wodurch es möglich ist, die Wertdaten der ersten Einheit in Abhängigkeit von der Datenangabe von bestimmtem Wert (D_VAL) zu erhöhen.

2. System nach Anspruch 1, **dadurch gekennzeichnet, dass** das Benutzerendgerät (EMT) ein Mobiltelefon ist.

3. System nach Anspruch 2, **dadurch gekennzeichnet, dass** der der ersten Einheit zugeordnete Code (IDENT), der in der Transferanfrage (RQT_TRSF) enthalten ist, die Mobiltelefonnummer des Benutzers umfasst.

4. System nach einem der Ansprüche 1 bis 3, **dadurch gekennzeichnet, dass** die gesicherte Anwendung (SIGN) eine Anwendung vom Typ Infrastruktur mit öffentlichem Schlüssel ist, die es dem Anbieter ermöglicht, die übertragene Anfrage zu signieren, um sich beim Server (SERV) zu authentifizieren.

5. System nach einem der Ansprüche 1 bis 4, **dadurch gekennzeichnet, dass** das Kommunikationsgerät des Anbieters (TERM_FOURN) ein Mobiltelefon ist, wobei die gesicherte Anwendung (SIGN) auf einer SIM-Karte gehostet ist, die in das Mobiltelefon des Anbieters eingefügt ist.

6. System nach Anspruch 5, **dadurch gekennzeichnet, dass** die in der Transferanfrage (RQT_TRSF) enthaltene Kennung des Anbieters (ID_F) die Mobiltelefonnummer des Anbieters umfasst.

7. System nach Anspruch 5 oder 6, **dadurch gekennzeichnet, dass** die zum Server (SERV) übertragene Anfrage (RQT_TRSF) durch die Eingabe eines geheimen Codes in das Mobiltelefon des Anbieters signiert wird.

8. System nach Anspruch 7, **dadurch gekennzeichnet, dass** sich der für die Signatur verwendete geheime Code von dem geheimen Code unterscheidet, der zum Entsperren des Telefons verwendet wird.

9. System nach einem der Ansprüche 4 bis 8, **dadurch gekennzeichnet, dass** der Verwaltungsserver (SERV) beim Empfang der vom Anbieter signierten Anfrage die Signatur mittels Authentifizierungsmitteln (M_AUTH) verifiziert, um die Übertragung der Anfrage zu bestätigen oder abzulehnen, und in dem Fall, dass die Übertragung bestätigt wird, den Transfervorgang ausführt.

10. System nach einem der vorhergehenden Ansprüche, **dadurch gekennzeichnet, dass** vor der gesicherten Übertragung der Transferanfrage mittels der gesicherten Anwendung (SIGN) das System Folgendes umfasst: eine vom Kommunikationsgerät des Anbieters zu Verifizierungsmitteln des Servers (M_VERIF) erfolgende Übertragung von Informationen, welche die Transferanfrage darstellen, um eine vorherige Verifizierung dieser Informationen durch den Server in Echtzeit zu ermöglichen, und nach der Validierung der die Transferinformationen bildenden Informationen das durch den Server erfolgende Senden einer Authentifizierungsanforderung an den Anbieter, um die gesicherte Übertragung der Transferanfrage mittels der gesicherten Anwendung zu initiieren.

11. System nach Anspruch 10, **dadurch gekennzeichnet, dass** sich der Anbieter im Sprachmodus mithilfe seines Kommunikationsgeräts mittels einer Diensttelefonnummer mit dem Server verbindet und die Informationen, welche die Transferanfrage bilden, zu den Verifizierungsmitteln (M_VERIF) überträgt, indem er in das Kommunikationsgerät den der ersten Einheit zugeordneten Code (IDENT), die Anbieterkennung (ID_F) und die Datenangabe von bestimmtem Wert (D_VAL) eintippt.

12. System nach Anspruch 10, **dadurch gekennzeichnet, dass** der Anbieter die Informationen, welche die Transferanfrage bilden, mittels einer digitalen Nachricht, die nach einem vorbestimmten Format abgefasst ist, an die Verifizierungsmittel (M_VERIF) des Servers überträgt.

13. System nach Anspruch 12, **dadurch gekennzeichnet, dass** die digitale Nachricht aus einer SMS-Dienst-Kurznachricht besteht.

14. System nach einem der Ansprüche 10 bis 13, **dadurch gekennzeichnet, dass** die Verifizierung der die Transferanfrage bildenden Informationen durch die Verifizierungsmittel (M_VERIF) des Servers darin besteht, zu verifizieren, dass der übertragene, der ersten Einheit zugeordnete Code (IDENT) einem Benutzer entspricht, der gemäß der vorab festgelegten Beziehung zu dem Netz gehört.

15. System nach einem der Ansprüche 10 bis 14, **dadurch gekennzeichnet, dass** parallel zur Verifizierung der die Transferanfrage bildenden Informationen der Server an den Anbieter eine Nachricht sendet, in der nach kommerziellen Informationen gefragt wird, die mit dem Benutzer im Zusammenhang stehen, was eine Aktualisierung der ersten Datenbank (DB_UTIL) ermöglicht.

16. System nach Anspruch 15, **dadurch gekennzeichnet, dass** der Verwaltungsserver (SERV) Mittel zur Aktualisierung (M_MAJ) der ersten Datenbank (DB_UTIL) durch kommerzielle Informationen bezüglich der Benutzer umfasst.

17. System nach einem der vorhergehenden Ansprüche, **dadurch gekennzeichnet, dass** es das durch den Verwaltungsserver (SERV) erfolgende Aussenden einer Bestätigung des Transfers an den Anbieter und den Benutzer umfasst.

18. System nach Anspruch 17, **dadurch gekennzeichnet, dass** die Bestätigung mittels einer SMS-Dienst-Kurznachricht gesendet wird.

19. Verfahren zur Verwendung eines Mobiltelefonienetzes mithilfe einer ersten Einheit (K_UTIL), die dafür vorgesehen ist, Wertdaten zu speichern, die Kommunikationszeit im Netz entsprechen, wobei die erste Einheit einem Code (IDENT) zugeordnet ist, der ein zum Netz gehöriges Benutzerendgerät (EMT) mittels einer vorab festgelegten Beziehung (PREPM) zwischen einem Netzbetreiber und dem Benutzer des Endgeräts identifiziert, wobei eine erste Datenbank (DB_UTIL), die von einem Verwaltungsserver (SERV) gehostet wird, vorgesehen ist, um die Daten aufzuzeichnen, die wenigstens die erste Einheit (K_UTIL) betreffen, wobei das Verfahren **dadurch gekennzeichnet ist, dass** es Folgendes umfasst:
das Aufzeichnen in einer vom Server gehosteten zweiten Datenbank (DB_FOURN) von Daten, die wenigstens eine zweite Einheit (K_FOURN) betreffen, die einem Kommunikationszeitanbieter (FOURN) zugewiesen ist und dafür vorgesehen ist, Wertdaten zu speichern, die Kommunikationszeit im Netz entsprechen;
das mittels einer gesicherten Anwendung (SIGN) von einem Kommunikationsgerät des Anbieters (TERM_ FOURN) zum Server erfolgende Übertragen einer Transferanfrage (RQT_TRSF), die wenigstens den der ersten Einheit zugewiesenen Code (IDENT), eine Kennung des Anbieters (ID_F) und eine Datenangabe von bestimmtem Wert (D_VAL) umfasst, und
beim Empfang der Transferanfrage durch den Server:
die Verringerung der Wertdaten der zweiten Einheit in Abhängigkeit von der Datenangabe von bestimmtem Wert (D_VAL) mittels Verwaltungsmitteln (M_DB) der zweiten Datenbank (DB_FOURN) und
die Erhöhung der Wertdaten der ersten Einheit in Abhängigkeit von der Datenangabe von bestimmtem Wert (D_VAL) mittels Verwaltungsmitteln (M_DB) der ersten Datenbank (DB_UTIL).

20. Kommunikationsgerät, **dadurch gekennzeichnet, dass** es einem Kommunikationszeitanbieter (FOURN) in einem Mobiltelefonienetz zugewiesen ist und dass es Folgendes umfasst: Mittel zur Eingabe von Informationen zum Aufladen einer ersten Einheit (K_UTIL), die dafür vorgesehen ist, Wertdaten zu speichern, die Kommunikationszeit im Netz entsprechen, wobei die Informationen wenigstens einen der ersten Einheit zugeordneten Code (IDENT), eine Kennung des Anbieters (ID_F), dem eine zweite Einheit (K_FOURN) zugewiesen ist, die dafür vorgesehen ist, Wertdaten zu speichern, die Kommunikationszeit im Netz entsprechen, und eine Datenangabe von bestimmtem Wert (D_VAL), die Kommunikationszeit entspricht, die von der zweiten zur ersten Einheit zu übertragen ist, umfassen, und Mittel zur gesicherten Übertragung (SIGN) der Aufladeinformationen zu einem Verwaltungsserver (SERV) der ersten und zweiten Einheit.

21. Computerprogramm, **dadurch gekennzeichnet, dass** es Anweisungen zum Befehlen der Ausführung des Verfahrens nach Anspruch 19 seitens des Kommunikationsgeräts des Anbieters umfasst.

## Claims

1. System for using a mobile phone network using a first entity (K_UTIL) provided for storing value data corresponding to communication time on the network, said first entity being associated with a code (IDENT) identifying a user terminal means (EMT) belonging to the network, by means of a pre-established relationship (PREPM) between an operator of the network and the user of the terminal means, this system comprising a management server (SERV) hosting a first database (DB_UTIL) for recording the data concerning at least the first entity (K_UTIL), **characterized in that** the server hosts a second database (DB_FOURN) for recording data concerning at least one second entity (K_FOURN), which is provided for storing value data corresponding to communication time on the network, said second entity (K_FOURN) being assigned to a communication time provider (FOURN), said system comprising means for transmitting, by means of a secure application (SIGN), from a communication device of the provider (TERM_FOURN) to the server, a transfer request (RQT_TRSF) including at least the code (IDENT) associated with the first entity, an identifier of the provider (ID_F) and a determined value datum (D_VAL), the transfer operation being performed by the management server on reception of the request by means of management means (M_DB) of the second database (DB_FOURN) allowing the value data of the second entity to be decreased on the basis of the determined value datum (D_VAL) and by means of management means (M_DB) of the first database (DB_UTIL) allowing the value data of the first entity to be increased on the basis of the determined value datum (D_VAL).

2. System according to Claim 1, **characterized in that** the terminal means of the user (EMT) is a mobile phone.

3. System according to Claim 2, **characterized in that** the code (IDENT) associated with the first entity included in the transfer request (RQT_TRSF) comprises the mobile number of the user.

4. System according to any one of Claims 1 to 3, **characterized in that** the secure application (SIGN) is an application of public key infrastructure type, allowing the provider to sign the transmitted request in order to authenticate itself to the server (SERV).

5. System according to any one of Claims 1 to 4, **characterized in that** the communication device of the provider (TERM_FOURN) is a mobile phone, the secure application (SIGN) being hosted by a SIM card inserted into the mobile phone of the provider.

6. System according to Claim 5, **characterized in that** the identifier of the provider (ID_F) included in the transfer request (RQT_TRSF) comprises the mobile number of the provider.

7. System according to Claim 5 or 6, **characterized in that** the request (RQT_TRSF) transmitted to the server (SERV) is signed by entering a PIN number on the mobile phone of the provider.

8. System according to Claim 7, **characterized in that** the PIN number used for the signature is different from the PIN number used to unlock the phone.

9. System according to any one of Claims 4 to 8, **characterized in that** the management server (SERV), on reception of the request signed by the provider, checks the signature by means of authentication means (M_AUTH), so as to confirm or invalidate the transmission of the request and, in the event of the transmission having been confirmed, performs the transfer operation.

10. System according to any one of the preceding claims, **characterized in that**, prior to the secure transmission of the transfer request by means of the secure application (SIGN), the system comprises a transmission, from the communication device of the provider to checking means of the server (M_VERIF), of information constituting the transfer request for a prior real-time check on this information by the server and, after validation of the information constituting the transfer request, the transmission, by the server, of an authentication request to the provider, so as to initiate the secure transmission of the transfer request by means of the secure application.

11. System according to Claim 10, **characterized in that** the provider connects to the server in voice mode by means of its communication device using a service phone number and transmits the information constituting the transfer request to the checking means (M_VERIF) by keying in, on the communication device, the code (IDENT) associated with the first entity, the provider identifier (ID_F) and the determined value datum (D_VAL).

12. System according to Claim 10, **characterized in that** the provider transmits the information constituting the transfer request to the checking means (M_VERIF) of the server by means of a digital message written using a pre-determined format.

13. System according to Claim 12, **characterized in that** the digital message is constituted by an SMS message.

14. System according to any one of Claims 10 to 13, **characterized in that** the checking of the information constituting the transfer request by the checking means (M_VERIF) of the server consists in checking that the transmitted code (IDENT) associated with the first entity corresponds to a user belonging to the network according to the pre-established relationship.

15. System according to any one of Claims 10 to 14, **characterized in that**, in parallel with the checking of the information constituting the transfer request, the server sends to the provider a message requesting business information relating to the user, allowing an update of the first database (DB_UTIL).

16. System according to Claim 15, **characterized in that** the management server (SERV) comprises means (M_MAJ) for updating the first database (DB_UTIL) with business information relating to the users.

17. System according to any one of the preceding claims, **characterized in that** it comprises the transmission, by the management server (SERV), of a confirmation of the transfer to the provider and the user.

18. System according to Claim 17, **characterized in that** the confirmation is sent by means of an SMS message.

19. Method for using a mobile phone network using a first entity (K_UTIL) provided for storing value data corresponding to communication time on the network, said first entity being associated with a code (IDENT) identifying a user terminal means (EMT) belonging to the network, by means of a pre-established relationship (PREPM) between an operator of the network and the user of the terminal means, a first database (DB_UTIL) hosted by a management server (SERV) being provided for recording the data concerning at least the first entity (K_UTIL), said method being **characterized in that** it comprises:
the recording, in a second database (DB_FOURN) hosted by the server, of data concerning at least one second entity (K_FOURN) assigned to a communication time provider (FOURN) and provided for storing value data corresponding to communication time on the network;
the transmission, by means of a secure application (SIGN), from a communication device of the provider (TERM_FOURN) to the server, of a transfer request (RQT_TRSF) including at least the code (IDENT) associated with the first entity, an identifier of the provider (ID_F) and a determined value datum (D_VAL) and,
on reception of the transfer request by the server:
the decreasing of the value data of the second entity on the basis of the determined value datum (D_VAL) by means of management means (M_DB) of the second database (DB_FOURN) and
the increasing of the value data of the first entity on the basis of the determined value datum (D_VAL) by means of management means (M_DB) of the first database (DB_UTIL).

20. Communication device, **characterized in that** it is assigned to a communication time provider (FOURN) on a mobile phone network and **in that** it comprises means for inputting reloading information of a first entity (K_UTIL) provided for storing value data corresponding to communication time on the network, said information comprising at least one code (IDENT) associated with the first entity, an identifier of the provider (ID_F) that has an assigned second entity (K_FOURN) provided for storing value data corresponding to a communication time on the network and a determined value datum (D_VAL) corresponding to communication time needing to be transferred from the second to the first entity, and means for secure transmission (SIGN) of said reloading information to a management server (SERV) of said first and second entities.

21. Computer program, **characterized in that** it comprises instructions for controlling the execution of the method according to Claim 19, on the communication device of the provider.
